# EUROPEAN PATENT APPLICATION

(11) **EP 1 734 785 A2**
(43) Date of publication of application: **20.12.2006**
(21) Application number: 06012295.9
(22) Date of filing: 14.06.2006
(51) Int. Cl.: H04R 5/02

(54) **Acoustic apparatus**

(30) Priority: 14.06.2005 JP 2005174140
(71) Applicant: SONY CORPORATION, Tokyo (JP)
(72) Inventor: Miura, Koji, Shinagawa-ku Tokyo (JP); Shima, Takashi, Shinagawa-ku Tokyo (JP); Niinuma, Shingo, Shinagawa-ku Tokyo (JP); Watanabe, Toshiki, Shinagawa-ku Tokyo (JP); Okazaki, Shigeru, Shinagawa-ku Tokyo (JP)
(74) Representative: Melzer, Wolfgang

(57) **Abstract**

According to the present invention, there is provide an acoustic apparatus in which the vibration generated by speaker units (3, 4) imposes no influence on the other devices provided in the apparatus. The acoustic apparatus includes at least a pair of speaker units (3, 4), a speaker box (2) that contains the pair of speaker units (3, 4), which have sound-generating sides facing away from each other, and a support member (21, 22) that supports the speaker box (2), wherein the speaker box (2) is spaced from an installation surface (M) because a baffle plate (5, 6) holding at least one of the speaker units (3, 4) has a circumferential edge supported by the support member (21, 22).

## Description

### CROSS REFERENCE TO RELATED APPLICATIONS

The present invention contains subject matter related to Japanese Patent Application JP 2005-174140 filed in the Japanese Patent Office on June 14, 2005, the entire contents of which being incorporated herein by reference.

### BACKGROUND OF THE INVENTION

### 1. Field of the Invention

The present invention relates to an acoustic apparatus that has a speaker box containing speaker units. More particularly, the invention relates to an acoustic apparatus that has speaker units whose vibration is hardly transmitted outside.

### 2. Description of the Related Art

Hitherto, audio-video (AV) systems have been used, which are constituted by audio apparatuses, such as speaker units, and a video apparatus that includes a image-displaying apparatus for displaying images played back by a video-disc player.

An AV system of this type has audio apparatuses and a video apparatus which are integrally formed with each other. The audio apparatuses, such as speaker units (i.e., audio units) or amplifiers, and the video apparatus, such as a video disc player or an image-displaying apparatus, are contained in the same housing rack.

### SUMMARY OF THE INVENTION

In the AV system, which is an integrated combination of an audio apparatus and a video apparatus via the housing rack, the vibration the speaker units make as they generate sound is transmitted to the video apparatus, inevitably imposing an adverse influence on the video apparatus.

For example, the video disc player that uses, as recording medium, an optical disc such as a DVD (Digital Versatile Disc) reproduces video signals and the like from the disc rotated by a disc-drive mechanism, by utilizing an optical pickup that remains out of contact with the optical disc. The optical pickup receives the vibration transmitted from the speaker units and may fail to perform correct playback of the optical disc. The biaxial actuator of the optical pickup, for example, may fail to operate stably. It may perform neither the focus control for focusing a light beam emitted from the optical pick on the signal-recording surface of the optical disc, and for scanning the recording track. Nor may it perform the tracking control for causing the light beam to trace the recording tracks of the optical disc. As a result, the optical pickup may fail to achieve correct reproduction of data signals recorded on the optical disc.

If a compact disc player that plays back optical discs such as compact discs is used as audio apparatus, vibration is transmitted from the speaker units to the compact disc player. Consequently, the data signals recorded on any optical disc may not be accurately reproduced, inevitably generating discontinuous sound.

If a television receiver of rear-projection type that optically displays images is used as image displaying, the vibration is transmitted from the speaker units to the optical lamp or reflection plate provided the receiver. The lamp or the reflection plate inevitably vibrates. Consequently, the images displayed on the display unit shake or blurred in color. The display unit can no longer display high-quality images.

The influence of the vibration generated by the speaker units is prominent on the low-frequency sound reproduced.

An acoustic apparatus in which the vibration generated in the speaker units is not transmitted to the other devices is disclosed in Jpn. UM Appln. Laid-Open Publication No. 59-8592 (Patent Document 1). A speaker system in which the vibration generated in the speaker units is suppressed and not transmitted from the system is disclosed in Jpn. Pat. Appln. Laid-Open Publication No. 61-48319 (Patent Document 2).

It is therefore desirable to provide an acoustic apparatus in which the vibration generated by the speaker units imposes no influence on the other devices provided in the apparatus.

It is also desirable to provide an acoustic apparatus that may be used in an audio-video (AV) system and that imposes no adverse influence on the recording/reproducing devices held out of contact with a recording medium such as an optical disc, thus enabling the devices to record and reproduce data signals reliably on and from the recording medium.

It is also desirable to provide an acoustic apparatus that may be used in an audio-video (AV) system and that prevents an image-displaying apparatus from degrading displaying images in quality.

According to an embodiment of the present invention, there is provided an acoustic apparatus including at least a pair of speaker units, a speaker box that contains the pair of speaker units, which have sound-generating sides facing away from each other, and a support member that supports the speaker box, wherein the speaker box is spaced from an installation surface because a baffle plate holding at least one of the speaker units has a circumferential edge supported by the support member.

The acoustic apparatus according to the embodiment of the present invention is of the type to be provided in a housing rack containing at least a video apparatus, with the support member supported by the housing rack.

According to an embodiment of the present invention, there is provided an acoustic apparatus including a pair of speaker units, a speaker box shaped like a rectangular parallelepiped, which has a pair of rectangular baffle plates facing each other and holding the speaker units with sound-generating sides facing away from each other, and a support member to which at least one of the rectangular baffle plates is secured at parts near corners, such that the speaker box is spaced from an installation surface.

In the acoustic apparatus according to the embodiment of the present invention, the two speaker units are supported in the speaker box and arranged with their sound-generating sides facing way from each other. Hence, the vibration to the baffle plate supporting one speaker unit and the vibration to the baffle plate supporting the other speaker unit propagate in the opposite direction and cancel out each other. Thus, the vibration of each baffle plate is suppressed, particularly at the circumferential edge of the baffle plate. Since the baffle plates are supported at the circumferential edge by supporting members, the transmission of vibration of the speaker units, both held in the speaker box, from the acoustic unit is controlled. Even if the acoustic apparatus is incorporated in an audio apparatus, a video apparatus or a housing rack, the adverse influence the acoustic apparatus imposes on the audio apparatus or video apparatus, such as a video disc player or an image-displaying apparatus, set in the housing rack will be suppressed. As a result, the audio apparatus and the video apparatus can reliably reproduce data. Thus, the image-displaying apparatus, for example, can display images not degraded at all.

### BRIEF DESCRIPTION OF THE DRAWINGS

FIG. 1 is a perspective view showing an acoustic apparatus according to an embodiment of the present invention;
FIG. 2 is a sectional view depicting the acoustic apparatus according to the embodiment of the present invention;
FIG. 3 is a partly sectional view illustrating the speaker box and the grille, both secured to the support member;
FIG. 4 is a characteristic diagram representing the reduction of vibration achieved in the acoustic apparatus according to the embodiment of this invention and the reduction of vibration achieved by a comparative example;
FIG. 5 is a sectional view showing an acoustic apparatus according to another embodiment of the present invention;
FIG. 6 is a perspective view of an audio-video (AV) system that incorporates an acoustic apparatus according to the embodiment of this invention; and
FIG. 7 is a sectional view showing the acoustic apparatus secured to the housing rack of the AV system.

### DETAILED DESCRIPTION OF THE PREFERRED EMBODIMENTS

An embodiment of the present invention, or an acoustic apparatus, will be described, with reference to the accompanying drawings.

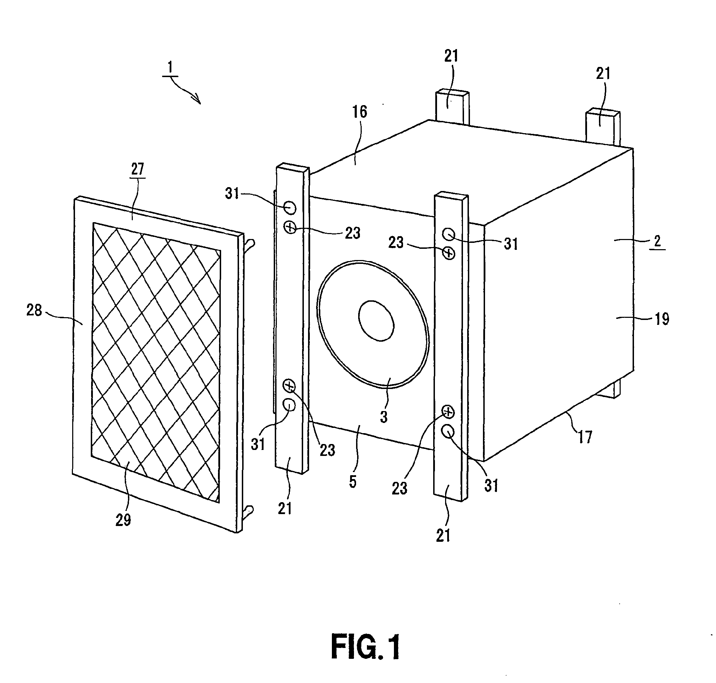

As shown in FIG. 1, an acoustic apparatus 1 according to an embodiment of the present invention has a speaker box 2 that is a rectangular box. The speaker box 2 contains two speaker units 3 and 4.

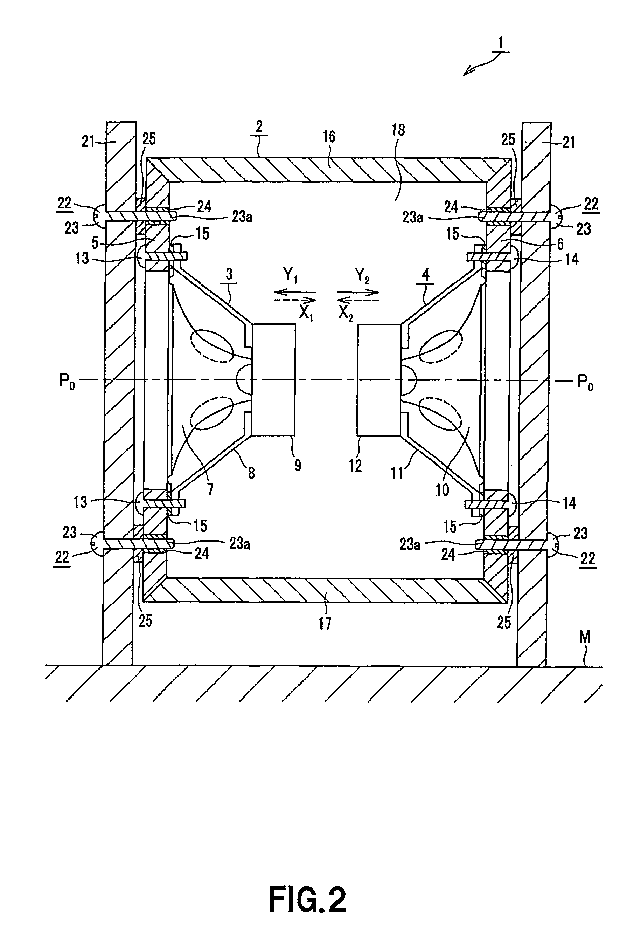

As shown in FIG. 2, the first speaker unit 3 is secured to the inner surface of a rectangular front baffle plate 5 that is secured to the front surface side of the speaker box 2. The second speaker unit 4 is secured to the inner surface of a rectangular rear baffle plate 6 that is secured to the rear surface side of the speaker box 2.

As shown in FIG. 2, the first speaker unit 3 of this acoustic apparatus 1 has a vibration plate 7, a speaker frame 8, and a magnetic circuit unit 9. The vibration plate 7 is shaped like a cone. The speaker frame 8 supports the vibration plate 7. The magnetic circuit unit 9 is fixed to the base of the speaker frame 8 and can vibrate the vibration plate 7 in accordance with an acoustic signal.

As shown in FIG. 2, the second speaker unit 4, which has the same shape as the first speaker unit 3, includes a vibration plate 10, a speaker frame 11, and a magnetic circuit unit 12. The vibration plate 10 is shaped like a cone. The speaker frame 11 supports the vibration plate 10. The magnetic circuit unit 12 is fixed to the base of the speaker frame 11 and can vibrate the vibration plate 10 in accordance with an acoustic signal.

The first speaker unit 3 is secured to the front baffle plate 5, with the vibration plate 7 having its sound-generating side opposed to the font baffle plate 5 and with the speaker frame 8 having its circumferential edge fastened to the front baffle plate 5 with fixing screws 13. Similarly, the second speaker unit 4 is secured to the rear baffle plate 6. That is, the vibration plate 10 has its sound-generating side opposed to the rear baffle plate 6, and the speaker frame 11 has its circumferential edge fastened to the rear baffle plate 6 with fixing screws 14.

The first and second speaker units 3 and 4, both provided in the speaker box 2, are secured, such that the sound-generating sides of the vibration plates 7 and 10 face the front baffle plate 5 and the rear baffle plates 6, respectively. Thus, the speaker units 3 and 4 are secured in the speaker box 2, with their sound-generating sides facing away from each other, as if one speaker unit were turned by 180° with respect to the other speaker unit.

The first and second speaker units 3 and 4 are positioned in the speaker box 2, with the axes P₀ of the vibration plates 7 and 10 aligned with each other as illustrated in FIG. 2.

Two gaskets 15 are bonded to the circumferential edges of the speaker frames 8 and 11, respectively. Hence, the vibration plates 7 and 10 are supported to vibrate in the directions of arrows Y₁ and Y₂ and the directions of arrow X₁ and X₂, as is illustrated in FIG. 2.

The first and second speaker units 3 and 4 are driven as currents of the same phase are supplied to them. As described above, the first and second speaker units 3 and 4 are positioned in the speaker box 2, with the sound-generating sides of the vibration plates 7 and 10 facing away from each other. Therefore, when the speaker units 3 and 4 are driven in the same phase, forces acting in the opposite directions are exerted not only on the vibration plates 7 and 10, respectively, but also on the front and rear baffle plates 5 and 6 that support the first and second speaker units 3 and 4, respectively. More specifically, when the vibration plate 7 vibrates in the direction o arrow Y₁, the front baffle plate 5 receives a force that moves it in the same direction, i.e., the direction of arrow Y₁. At the same time, the vibration plate 10 vibrates in the opposite direction, i.e., the direction of arrow Y₂. Therefore, the rear baffle plate 6 receives a force that moves it in the direction of arrow Y₂. Similarly, when the front baffle plate 5 receives a force that moves it in the direction of arrow X₁, the rear baffle plate 6 receives a force that moves it in the opposite direction, i.e., the direction of arrow X₂.

The front baffle plate 5 and the rear baffle plate 6 are coupled to the top plate 16 and bottom plate 17 of the speaker box 2 and to the side plates 18 and 19 that couple the top plate 16 to the bottom plate 17. Thus, the forces generated when the speaker units 3 and 4 are driven and acting in the directions of arrows Y₁ and Y₂ (or directions of arrows X₁ and X₂) cancel each other. That is, the vibration generated when the first and second speaker units 3 and 4 are driven is transmitted through the top plate 16, bottom plate 17 and side plates 18 and 19. The vibration generated by the first speaker unit 3 and the vibration generated by the second speaker unit 4 are transmitted, with a phase difference of 180° between them, through the top plate 16, bottom plate 17 and side plates 18 and 19. The vibration of the first speaker unit 3 and the vibration of the second speaker unit 4 cancel each other, because the first speaker unit 3 and the second speaker unit 4 are oriented in the opposite directions. Thus, the vibration of the front baffle plate 5 and the vibration of the rear baffle plate 6 are controlled. The vibration is suppressed, particularly at that part of the front baffle plate 5 which is secured to the side plate 18 and at that part of the rear baffle plate 6 which is secured to the side plate 19. Furthermore, the vibration is suppressed at position near the four corners of the speaker box 2, which are defined by the top plate 16 and the side plate 18, by the top plate 16 and the side plate 19, by the bottom plate 17 and the side plate 18 and by the bottom plate 17 and the side plate 19.

In the acoustic apparatus 1 according to the embodiment of this invention, support members 21 support the speaker box 2 at such a position that the vibration the speaker units 3 and 4 generate when driven is not transmitted outside.

In the present embodiment of this invention, or the acoustic apparatus 1, the speaker box 2 is supported by a plurality of support members 21. The support members 21 stand on a base and extend along the sides of the front baffle plate 5 and along the sides of the rear baffle plate 6.

As shown in FIG. 2, the support members 21 stand on an installation surface M. The lower end part of each member 21 extends downwards from the bottom plate 17 of the speaker box 2. The support members 21 therefore hold the speaker box 2 above the installation surface M. Two support members 21 extend parallel along the sides of the front baffle plate 5, respectively. The other two support members 21 extend parallel along the sides of the rear baffle plate 6, respectively. In this embodiment, the support members 21 are longer than the height of the speaker box 2. Thus, the lower end part of each support member protrudes downward from the bottom plate 17 of the speaker box 2.

The support members 21 are fastened to the front and rear baffle plates 5 and 6 with fastening mechanisms 22. More precisely, two fastening mechanisms 22 fasten each support member 21, at an upper part and a lower part to those parts of the front or rear baffle plate which are near the corners of the baffle plate. As pointed out above, the vibration is most suppressed at these four parts of the baffle plate than any other parts, when the first and second speaker units 3 and 4 are driven in the same phase.

The positions where the support members 21 are fastened to the front baffle plate 5 and rear baffle plate 6 may be shifted from the parts near the corners of the baffle plates, either toward the center of each baffle plate, depending on the configuration of each support member 21 and the structure of the speaker box 2.

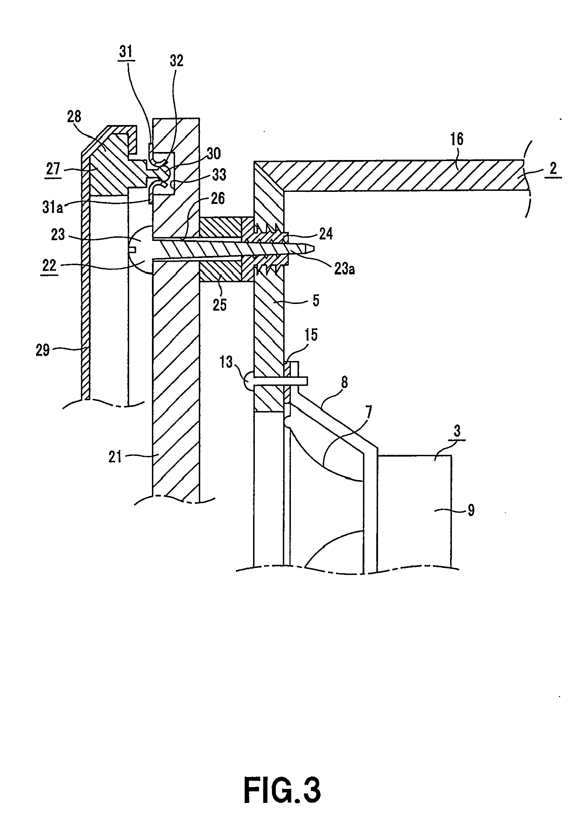

As shown in FIGS. 2 and 3, each fastening mechanism 22 is composed of a bolt 23, a rasp-cut nut 24, and a washer 25. The bolt 23 fastens the support member 21 to the front baffle plate 5 or rear baffle plate 6. The rasp-cut nut 24 is fixed in the baffle plate 5 or 6. The washer 25 is mounted on the bolt 23. The rasp-cut nut 24 is driven near a corner of the front baffle plate 5 or rear baffle plate 6.

The bolt 23 is inserted into the screw through hole 26 cut in the support member 21 and set into screw engagement with the rasp-cut nut 24. Each support member 21 is thereby secured to the front baffle plate 5 or rear baffle plate 6. At this time, the washer 25 is mounted on the shaft part 23a of the bolt 23. Thus, the support member 21 is spaced from the baffle plate 5 or 6 by the thickness of the washer 25.

Each support member 21 is spaced from the front baffle plate 5 or rear baffle plate 6 and fastened to only that part of the baffle plate 5 or 6 which is near a corner, thus supporting the speaker box 2. This further suppresses the transmission of vibration from the speaker box 2 to each support member 21.

The washers 25 may be made of elastic synthetic resin, rubber, or the like. Then, the washers 25 reduce the vibration transmitted from the speaker box 2 to each support member 21. The vibration transmitted outside through each support member 21 can therefore be controlled even more.

In this embodiment, each fastening mechanism 22 has its rasp-cut nut 24 driven in the baffle plate 5 or 6 and its bolt 23 set in screw engagement with the rasp-cut nut 24, thus fastening one supporting member 21. The fastening mechanisms 22 are therefore sealed. The sound generated in the speaker box 2 will not leak outside through the fastening mechanisms 22.

In the acoustic apparatus 1 according to the embodiment of this invention, a grille 27 may be attached to the front baffle plate 5 as illustrated in FIG. 1. The grille 27 covers the front of the speaker box 2, protecting the vibration plate 7 and improving the outer appearance of the speaker box 2. The grille 27 has a rectangular grille frame 28 that is large enough to cover the front of the speaker box 2. The grille frame 28 is a molding made of synthetic resin and holds a speaker net 29 used as a screen. As shown in FIG. 3, the grille 27 has engagement projections 30 formed integral with the corner parts of the grille frame 28 and protruding from the back of the grille frame 28. The engagement projections 30 are fitted in the engagement parts 31 provided on the support members 21. The grille 27 is thereby removably attached to the support members 21.

The engagement parts 31 are moldings made of synthetic resin. Each engagement part 31 has a flange part 31a and an engagement cylindrical part 32 projecting from the flange part 31a. The cylindrical part 32 can resiliently deform to hold an engagement projection 30. The engagement part 31 is secured to the support member 21 when the cylindrical part 32 is fitted into a recess 33 made in the support member 21 and the flange part 31a is secured to the rim of the recess 33.

The grille 27 is attached to the speaker box 2 as the engagement projections 30 are fitted into the cylindrical parts 32. The grille 27 is removed from the speaker box 2 as the engagement projections 30 are pulled out of the cylindrical parts 32.

The acoustic apparatus 1 according to the embodiment of this invention, which is configured as described above, was tested to determine how much the vibration transmitted outside the apparatus 1 was reduced. The results of the test will be shown, in comparison with an acoustic apparatus that has only one speaker unit in the speaker box.

The reduction of vibration is evaluated in terms of the sound pressure generated by the speaker unit 3 attached to the front baffle plate 5 of the speaker box 2.

The acoustic apparatus to be compared with the acoustic apparatus 1 according to the embodiment of this invention has one speaker unit attached to the front baffle plate, having no speaker unit attached to the rear baffle plate. The support members that support the speaker box are identical to those of the apparatus 1 according to this embodiment and will not be described in detail.

In the test, coupling plates were used. Some of the coupling plates coupled the support members 21 secured to the front baffle plate 5 with the support members 21 secured to the rear baffle plate 6, at their upper ends. The remaining coupling plates coupled the support members 21 secured to the front baffle plate 5 with the support members 21 secured to the rear baffle plate 6, at their lower ends. Further, vibration-acceleration pickups were mounted on the coupling plates extending above the top plate 16 of the speaker box 2 and the reduction of vibration transmitted outside the speaker box 2 was measured.

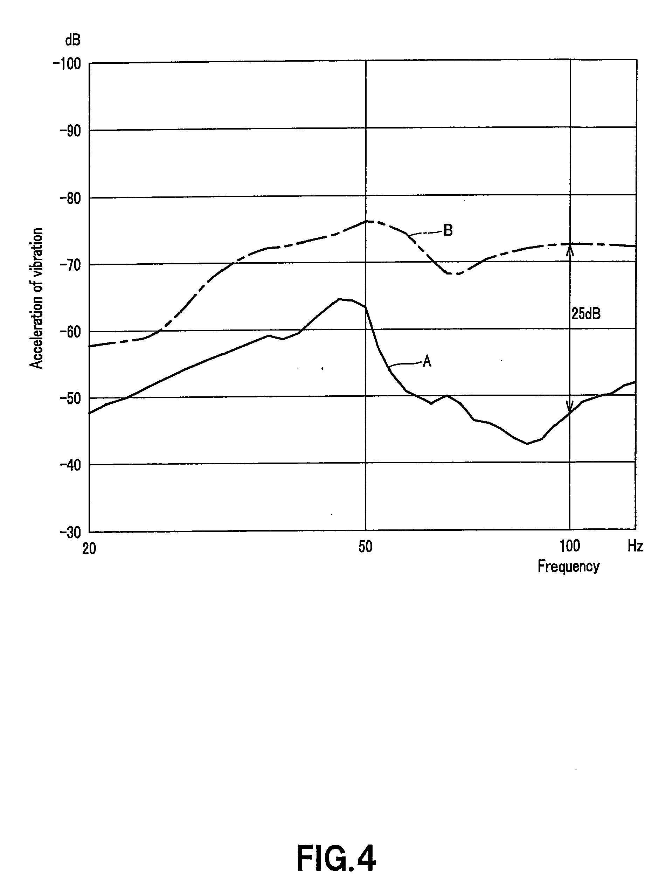

FIG. 4 is a characteristic diagram representing the results of the test.

Curve B shown in FIG. 4 indicates the vibration acceleration with respect to the frequency of the drive signal supplied to one speaker unit attached to, for example, the front baffle plate 5 of the speaker box 2. In this case, no rear baffle plate was provided, which might face the front baffle plate 5.

Curve A shown in FIG. 4 indicates the vibration acceleration with respect to the frequency of the drive signal supplied to two speaker units attached to the front baffle plate 5 and the rear baffle plate 6, respectively, and with sound-generating sides facing away from each other.

As seen from the test results shown in FIG. 4, the vibration transmitted outside was more reduced in the acoustic apparatus of this embodiment in which the drive signal was supplied to the two speaker units provided in the speaker box, attached to the front and rear baffle plates, respectively, and with the sound-generating sides facing away from each other as in the embodiment of the present invention, than in the acoustic apparatus in which the drive signal was supplied to only one speaker unit provided in the speaker box. The reduction of vibration of 25 dB was observed, particularly for a frequency band near 100 Hz.

Thus, with the acoustic apparatus 1 according to the embodiment of the present invention, it is possible to suppress the propagation of vibration from the apparatus 1, the vibration generated when the speaker units 3 and 4 are driven in the speaker box 2. Even if this acoustic apparatus 1 is incorporated in a housing rack, together with an audio apparatus or a video apparatus, it will not impose adverse influence on the audio apparatus or the video apparatus such as a video disc player or an image-displaying apparatus. Hence, audio data and video data can be reproduced, not influenced by the vibration, and the images the image displaying apparatus displays are not degraded in quality.

In the acoustic apparatus 1 described above, the front baffle plate 5 and the rear baffle plate 6 are supported, each by a pair of support members 21, keeping the speaker box 2 out of contact with the installation surface. Instead, only the front baffle plate 5 may be supported by two support members 21, so that the speaker box 2 may not contact the installation surface. If this is the case, legs extending downwards from the bottom plate of the speaker box 2 may be coupled to the proximal ends of the support members 21 and may hold the speaker box above the installation surface. Otherwise, only the rear baffle plate 6 may be supported by two support members 21. In this case, too, the speaker box 2 does not contact the installation surface.

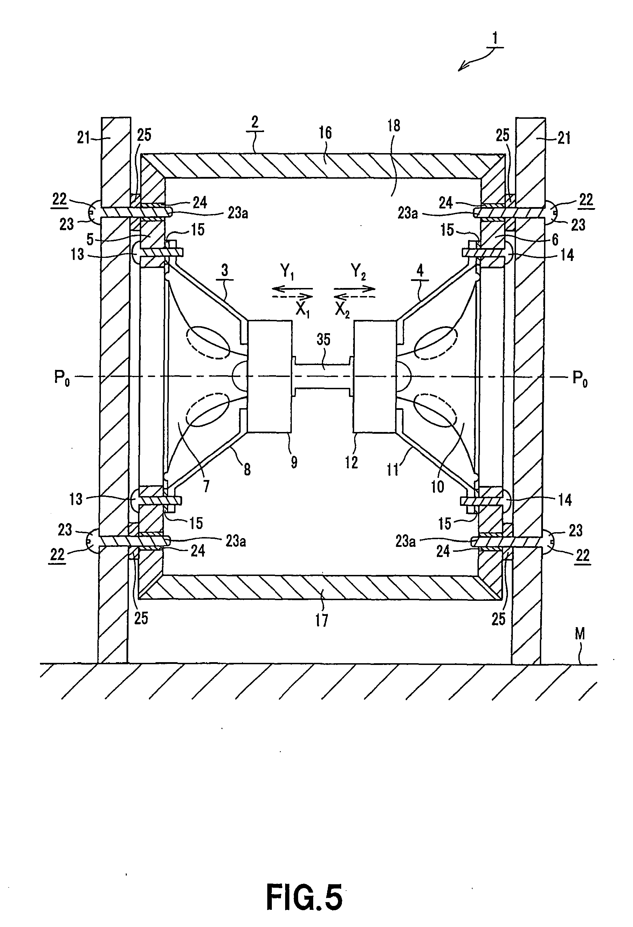

In the embodiment described above, the first and second speaker units 3 and 4 are secured to the front baffle plate 5 and the rear baffle plate 6, respectively, with their sound-generating sides turned by 180° with respect to each other, as is illustrated in FIG. 2. Further, the first and second speaker units 3 and 4 may have their backs coupled by a coupling rod 35 as shown in FIG. 5. The coupling rod 35 is secured between the magnetic circuit unit 9 of the first speaker unit 3 and the magnetic circuit unit 9 of the second speaker unit 4, coupling the speaker units 3 and 4.

Since the first and second speaker units 3 and 4 are thus coupled with the coupling rod 35, the frame 8 of the first speaker unit 3 and the frame 11 of the second speaker unit 4 are prevented from moving when the speaker units 3 and 4 are driven. The displacement of the speaker box 2, particularly that of the top plate 16 and bottom plate 17, is therefore suppressed. As a result, the vibration of the top plate 16 and bottom plate 17, and that of the side plates 18 and 18, too, are controlled. The force that may displace the baffle plates 5 and 6 decrease. Hence, the vibration transmitted outside the apparatus can be suppressed.

The front baffle plate 5 may have a duct that guides the sound coming from the back of the first speaker unit 3 to the front of the apparatus. The duct can improve the sound-pressure frequency characteristic of the sound generated by the first speaker unit 3. The duct can enhance the sound-pressure frequency characteristic for, particularly, sound of low-band frequencies.

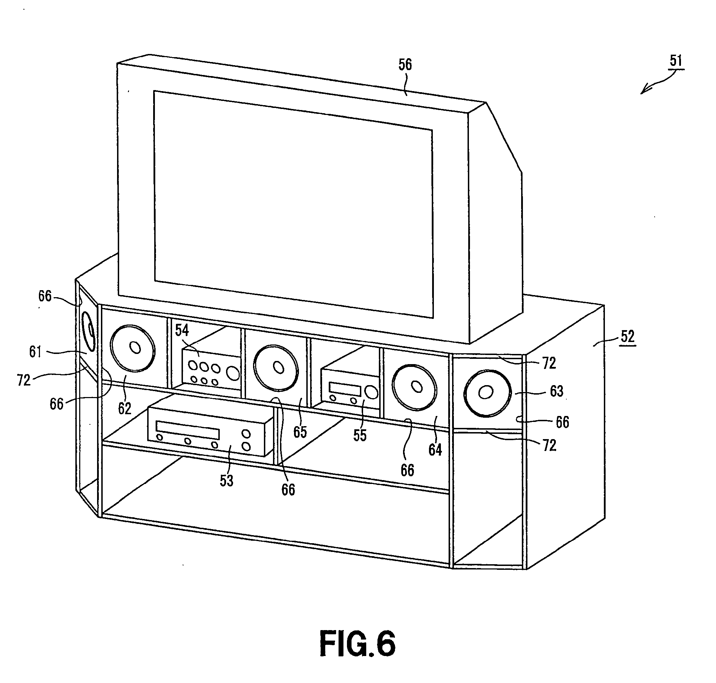

As FIG. 6 shows, the acoustic apparatus according to the embodiment of this invention may be set in the housing rack 52 of an audio-video (AV) system 51. The housing rack 52 contains video apparatuses such as an optical disc player 53 and audio apparatuses such as an amplifier 54 and a tuner 55. The optical disc player 53 uses, as recording medium, an optical disc such as a DVD (Digital Versatile Disc) or a compact disc. An image-displaying apparatus, such as a television receiver 56 of rear-projection type, is mounted on the housing rack 52.

The AV apparatus system 51 shown in FIG. 6 has two left-channel speaker units 61 and 62, two right-channel speaker units 63 and 64, and a center-channel speaker unit 65 for stereo reproduction. The speaker units 61 to 65 are placed in the speaker compartment 66 of the housing rack 52.

The speaker units 61 to 65 are set in a speaker box of the type used in the acoustic apparatus 1 described above. The speaker box containing the units 61 to 65 is removably arranged in the speaker compartment 66 of the housing rack 52.

Of the two left-channel speaker units 61 and 62, the speaker unit 61 reproduces sound of low-band frequencies, while the speaker unit 62 reproduces sound of high-band frequencies. Similarly, of the right-channel speaker units 63 and 64, the speaker unit 63 reproduces sound of low-band frequencies, while the speaker unit 64 reproduces sound of high-band frequencies. The center-channel speaker unit 65 reproduces sound of all frequency bands.

The speaker units 61 and 63 generate sound of low-band frequencies ranging from 20 to 150 Hz. If the vibration resulting from this sound is transmitted to the audio apparatuses and the video apparatuses, and to the image-displaying apparatus, it will impose adverse influence on these apparatuses, much degrading the sound reproducing characteristic and the quality of images displayed.

In view of this, of the speaker units 61 to 65, the speaker units 61 and 63 that reproduce sound of low-band frequencies are contained in the acoustic apparatus 1 according to the embodiment of this invention, and the acoustic apparatus 1 is placed in the housing rack 52 in the AV system 51 illustrated in FIG. 6.

The acoustic apparatus 1 used in the AV system 51 of FIG. 6 has the same basic configuration as shown in FIGS. 1 and 2. The components identical to those shown in FIGS. 1 and 2 are designated at the same reference numbers and will not be described in detail.

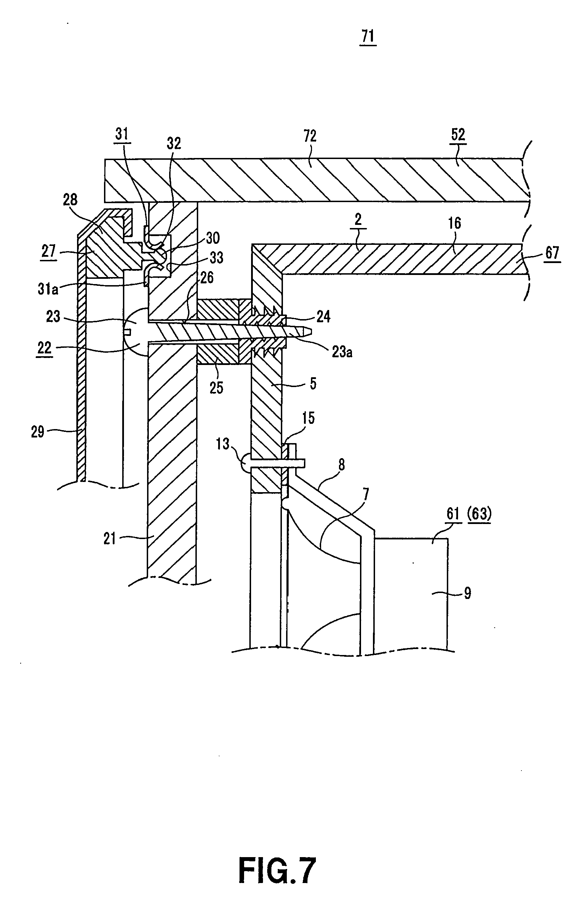

The acoustic apparatus 71 is set in the housing rack 52 of the AV system 51, because the supporting members 21 are coupled in the space between the shelf plates 72 that constitute the speaker compartments 66 of the housing rack 52, as is illustrated in FIG. 7. That is, the acoustic apparatus 71 is contained and secured in the housing rack 52, held by the support members 21 that support the speaker box 2.

The speaker box 2 contains a speaker unit (not shown) equivalent to the speaker unit 4 attached to the rear baffle plate 6. Like the speaker units 3 shown in FIGS. 2 and 5, this speaker unit has its sound-generating side turned by 180° with respect to the speaker units 61 and 63 that reproduce sound of low-band frequencies.

The speaker box 2 is contained in the housing rack 52, while supported by the support members 21. This suppresses the transmission of the vibration generated as the speaker units 61 and 63 provided in the speaker box 2 are driven along with the other speaker unit 4, to the housing rack 52. Thus, the adverse influence is reduced, which the vibration imposes on the audio apparatuses and video apparatuses contained in the housing rack 52, and on the image-displaying apparatus mounted on the housing rack 52. Therefore, the audio apparatuses and the video apparatuses can operate stably, and the image-displaying apparatus can display images not degraded in quality at all.

The other speaker units 62, 64 and 65 provided in the housing rack 52 may be contained, like the above-mentioned acoustic apparatus 71, in the speaker box 2 that is supported by the supporting members 21. More precisely, the units 62, 64 and 65 may be contained in the speaker compartment 66 of the housing rack 52. Alternatively, all speaker units 61 to 65 may be provided in a plurality of the speaker boxes 2 supported by the support members 21, respectively, and may be contained in a plurality of speaker components 66, respectively. If all speaker units 61 to 65 are provided in respective speaker boxes 2 that are supported by the support member 21 in the acoustic apparatus 71, the adverse influence on the audio apparatuses and video apparatuses provided in the housing rack 52 and the image-displaying apparatus mounted on the housing rack 52 can be suppressed more reliably.

A grille 27 is removably attached to the front of the support members 21 as in the acoustic apparatus 1 described above. The grille 27 is large enough to cover almost the entire front of the speaker component 66.

The acoustic apparatus 71 used in the AV system 51 of FIG. 6 may be one that can be removably inserted in the speaker compartment 66 of the housing rack 52. If this is the case, the support member 21 supporting the speaker box 2 should be removably inserted in the housing rack 52, not fixed thereto. If the acoustic apparatus 71 is a removable one, it can be set at any desired position. This helps to change the acoustic space in accordance with the environment of the AV system 51, making the space desirable to the user.

The present invention is not limited to the embodiments described above. Various changes and modifications can, of course, be made without departing from the scope and spirit of this invention.

It should be understood by those skilled in the art that various modifications, combinations, sub-combinations and alterations may occur depending on design requirements and other factors insofar as they are within the scope of the appended claims or the equivalents thereof.

## Claims

1. An acoustic apparatus comprising:
at least a pair of speaker units;
a speaker box (2) that contains the pair of speaker units (3, 4), which have sound-generating sides facing away from each other; and
a support member (21, 22) that supports the speaker box,
wherein the speaker box is spaced from an installation surface (M) because a baffle plate (5, 6) holding at least one of the speaker units (3, 4) has a circumferential edge supported by the support member.

2. The acoustic apparatus according to claim 1, wherein the baffle plate holding the speaker unit is supported at parts near corners and the speaker box is thereby secured to the support member.

3. The acoustic apparatus according to claim 1 or 2, wherein the speaker box is spaced from the installation surface because the baffle plate holding both speaker units has a circumferential edge supported by the support member.

4. The acoustic apparatus according to anyone of claims 1 to 3, wherein said pair of speaker units are driven in the same phase.

5. The acoustic apparatus according to anyone of claims 1 to 4, wherein said pair of speaker units (3, 4) supported in the speaker box (2) and having sound-generating sides facing away from each other have rear sides facing each other and are coupled to each other at rear side by a coupling member (35).

6. The acoustic apparatus according to anyone of claims 1 to 5, which is contained in a housing rack containing at least a video apparatus, with the support member supported by the housing rack.

7. An acoustic apparatus comprising:
a pair of speaker units (3, 4);
a speaker box (2) shaped like a rectangular parallelepiped, which has a pair of rectangular baffle plates (5, 6) facing each other and holding the speaker units (3, 4) with sound-generating sides facing away from each other; and
a support member (21, 22) to which at least one of the rectangular baffle plates (5, 6) is secured at parts near corners, such that the speaker box (2) is spaced from an installation surface (M).
